# EUROPÄISCHE PATENTSCHRIFT

(11) **EP 2 805 127 B1**
(45) Veröffentlichungstag und Bekanntmachung des Hinweises auf die Patenterteilung: **24.04.2019**
(21) Anmeldenummer: 13702884.1
(22) Anmeldetag: 21.01.2013
(51) Int. Cl.: G01B 3/46, G01B 5/02

(54) **VORRICHTUNG UND VERFAHREN ZUM PRÜFEN DES VERSCHLEISSES VON ROLLENKETTEN**
DEVICE AND METHOD FOR CHECKING THE WEAR OF ROLLER CHAINS
DISPOSITIF ET PROCÉDÉ DE CONTRÔLE DE L'USURE DE CHAÎNES À ROULEAUX

(30) Priorität: 19.01.2012 DE 102012100436
(43) Veröffentlichungstag der Anmeldung: 26.11.2014
(73) Patentinhaber: Höbel, Glenn, 66707 Schopp (DE); Bayer, Reiner, 67705 Trippstadt (DE)
(72) Erfinder: Höbel, Glenn, 66707 Schopp (DE); Bayer, Reiner, 67705 Trippstadt (DE)
(74) Vertreter: Wieske, Thilo
(86) Internationale Anmeldenummer: PCT/DE2013/100018
(87) Internationale Veröffentlichungsnummer: WO 2013/107447

(56) Entgegenhaltungen:
- GB-A- 2 396 420
- US-A- 4 092 781
- US-A1- 2010 162 583

## Beschreibung

Die Erfindung betrifft eine Vorrichtung und ein Verfahren zum Prüfen des Verschleißes von Rollenketten, wobei Mittel zum Spannen eines Teilabschnitts der Rollenkette mit einer definierten Meßlast vorgesehen sind und Mittel zum Messen des Abstandes zwischen einer bestimmten Anzahl von Kettengliedern vorgesehen sind.

Aus der US 4,151,652 A ist eine Lehre zum Messen des Abstandes zwischen zwei Nietköpfen einer Kette bekannt, wobei von Nietkopfmitte zu Nietkopfmitte gemessen wird. Eine definierte Meßlast ist mit dieser Vorrichtung nicht auf die Kette aufbringbar. Diese Messung ist bei montierter Kette kaum möglich und auch bei demontierter Kette wenig präzis.

Die DE 91 10 896 U1 beschreibt eine Vorrichtung zur Feststellung des Verschleißes von Rollenketten, bestehend aus einem starren Grundkörper, der an einer Längsseite mit zwei zum Eintreten in die von den Kettengliedern begrenzten Zwischenräume bestimmten Nasen versehen ist, von denen die eine aus einer fest angeordneten Rollenabstütznase und die andere aus einer Meßnase besteht und deren Abstand vorzugsweise einem Mehrfachen der Länge eines Kettengliedes entspricht, welche als einstückig hergestellte Grenzlehre ausgebildet ist, wobei die Meßnase ebenfalls starr angeordnet und der Abstand der beiden Nasen entsprechend einer vorgewählten Dehnung der Rollenkette bemessen ist. Eine definierte Meßlast kann auch mit dieser Vorrichtung nicht auf die Kette aufgebracht werden. Diese Vorrichtung ist auch insofern nachteilig, als sie umständlich in der Herstellung und nur bei leichten Ketten, wie Fahrradketten, anwendbar ist und zudem nur festgestellt werden kann, ob eine Kette noch brauchbar oder bereits zu stark abgenutzt ist.

Die DE 295 08 570 U1 und die GB 2 396 420 A beschreiben ähnliche Vorrichtungen zum Messen von Verschleiß an Rollenketten, die einen Grundkörper mit einer Prüfnase, die mit einer Skaleneinteilung versehen ist, und eine Rollenabstütznase aufweisen. Mit dieser Vorrichtung kann zwar ein Zahlenwert ermittelt werden, jedoch ist die Messung unpräzis. Auch mit dieser Vorrichtung kann keine definierte Meßlast auf die Kette aufgebracht werden.

Aus der DE 298 17 329 U1 ist eine Vorrichtung zur Feststellung des Verschleißes von Rollenketten bekannt, die aus einem Grundkörper besteht, der an einer Längsseite mit zwei zum Einführen in von den Kettengliedern umgrenzte Zwischenräume bestimmten Nasen versehen ist, von denen die eine eine feste Rollenabstütznase und die andere eine Meßnase ist, deren Abstand einem Mehrfachen der Länge eines Kettengliedes bzw. einer vorgewählten Längung bzw. Dehnung der Rollenkette entspricht, wobei der Grundkörper aus zwei gelenkig miteinander verbundenen Teilen gebildet ist, deren gestreckte Ausrichtung auf einer Kette anzeigt, daß die Kette verschlissen ist. Auch hier kann nur festgestellt werden, ob eine Kette noch brauchbar oder bereits zu stark abgenutzt ist, das Aufbringen einer definierten Meßlast auf die Kette ist auch bei dieser Vorrichtung nicht möglich.

Die US 4,092,781 A beschreibt eine Vorrichtung zum Bestimmen der Verlängerung einer Rollenkette aufgrund von Abnutzung. Die Kette wird hierbei zwischen zwei Armen der Vorrichtung durch eine Feder gespannt und der Abstand zwischen einer bestimmten Anzahl von Kettengliedern einer Referenzkette mit dem entsprechenden Abstand bei der zu bestimmenden Kette verglichen, was unpräzise ist. Nachteilig ist hierbei, daß jeweils eine Referenzkette erforderlich ist. Das Übertragen einer definierten Meßlast auf die Kette ist auch mit dieser Vorrichtung kaum möglich. Aus der US 2010/162583 A1 ist eine ähnliche Lösung bekannt.

Die Aufgabe der Erfindung besteht darin, eine Vorrichtung zum Prüfen des Verschleißes von Rollenketten zu schaffen, die eine quantitative Aussage über den Verschleißzustand bei einer Messung der Rollenkette im montierten Zustand ermöglicht.

Diese Aufgabe wird erfindungsgemäß dadurch gelöst, daß die Vorrichtung aus zwei unterschiedlichen Werkzeugen besteht, wobei das eine Werkzeug Mittel zum Spannen eines Teilabschnitts der Rollenkette mit einer definierten Meßlast umfasst und das andere Werkzeug Mittel zum Messen des Abstandes zwischen einer bestimmten Anzahl von Kettengliedern umfasst, wobei die Mittel zum Spannen eines Teilabschnittes der Rollenkette zwei Bolzen, die jeweils in eine Kettenöffnung eingreifen können, und einen die beiden Bolzen verbindenden Grundkörper aufweisen, wobei der Abstand der Bolzen veränderbar ist und die Mittel zum Messen des Abstandes zwei Anlagebolzen aufweisen, die zur seitlichen Anordnung an den Kettenlaschen jeweils zwischen zwei Nietköpfen ausgebildet sind, wobei ein kreisförmiger Bereich jedes Anlagebolzens zwischen zwei Nietköpfen anliegend plazierbar ist und eine Vorrichtung zum Messen und Anzeigen des Abstandes zwischen den beiden Anlagebolzen umfassen.

Bei einer alternativen Ausgestaltung der Erfindung wird die Aufgabe dadurch gelöst, daß die Vorrichtung aus zwei unterschiedlichen Werkzeugen besteht, wobei das eine Werkzeug Mittel zum Spannen eines Teilabschnitts der Rollenkette mit einer definierten Meßlast umfasst und das andere Werkzeug Mittel zum Messen des Abstandes zwischen einer bestimmten Anzahl von Kettengliedern umfasst, wobei die Mittel zum Spannen eines Teilabschnittes der Rollenkette zwei Bolzen, die jeweils in eine Kettenöffnung eingreifen können, und einen die beiden Bolzen verbindenden Grundkörper aufweisen, wobei der Abstand der Bolzen veränderbar ist und die Mittel zum Messen des Abstandes zwei Anlagebolzen aufweisen, die zur seitlichen Anordnung an den Kettenlaschen jeweils zwischen zwei Nietköpfen ausgebildet sind, wobei die Anlagebolzen einen v-förmigen Einschnitt aufweisen, der auf einem der Nietköpfe zentrierbar ist und eine Vorrichtung zum Messen und Anzeigen des Abstandes zwischen den beiden Anlagebolzen umfassen.

Der Erfindung liegt die Erkenntnis zugrunde, daß es sinnvoll ist, mit zwei unterschiedlichen Werkzeugen einerseits einen zugänglichen Teilbereich der Kette mit einer definierten Meßlast zu spannen und andererseits innerhalb dieses gespannten Teilbereichs den Abstand zwischen einer bestimmten Anzahl von Kettengliedern (z.B. 20 Kettengliedern) zu messen. Erst die Trennung des Spannvorgangs von dem Meßvorgang führt zu einem präzisen und reproduzierbaren Meßergebnis. Zudem erfolgt der Meßvorgang nicht wie beim Stand der Technik an der Ober- oder Unterseite der Rollenkette durch Eingriff des Meßgerätes in die Freiräume der Rollenkette, sondern seitlich an den Kettenlaschen und dort jeweils zwischen zwei Nietköpfen. Es hat sich im Rahmen der Erfindung gezeigt, daß die Position und Form der Nietköpfe eine sehr gut reproduzierbare Messung ermöglicht. Die beiden Anlagebolzen werden auf jeweils einer Kettenlasche zwischen zwei Nietköpfen angelegt, womit eine ebene Anlagefläche gegeben ist. Steht keine ebene Fläche zur Verfügung, kann die Tastfläche des Anlagebolzens als v-förmige Tastfläche ausgebildet sein, um auf dem Nietkopf arretiert zu werden. Aufgrund der Tatsache, daß die Anlagebolzen zwischen den zwei Nietköpfen plaziert werden, können Handhabungsfehler vermieden werden und das Ergebnis ist gut reproduzierbar. Die Vorteile der Erfindung bestehen im Wesentlichen darin, daß schnell, einfach und präzise eine quantitative Bestimmung des Verschleißes einer Rollenkette bei montierter Kette erfolgen kann.

Der Abstand der Bolzen ist entsprechend der vorgegebenen Meßlast veränderbar. Es ist möglich, daß an einer Markierung die jeweils auf die Rollenkette aufgebrachte Meßlast ablesbar ist.

Eine bevorzugte Ausgestaltung der Erfindung besteht darin, daß die Mittel zum Messen des Abstandes zwischen einer bestimmten Anzahl von Kettengliedern als Abstandslehre mit einem veränderbaren Abstand zwischen den beiden Anlagebolzen ausgebildet ist.

In diesem Zusammenhang ist es vorteilhaft, daß die Abstandslehre eine digitale Abstandslehre ist.

Weiterhin ist vorgesehen, daß die Vorrichtung Speichermittel zum Speichern der Meßwerte umfaßt.

Diese Speichermittel können sowohl intern in der Meßvorrichtung, beispielsweise in Form eines Speicherchips, vorliegen oder die Vorrichtung kann einen Anschluß an ein externes Speichergerät, beispielsweise einen Computer, aufweisen, auf dem dann die Auswertung der Meßergebnisse erfolgt.

Es ist vorteilhaft, daß die freien Enden der Anlagebolzen magnetisch sind.

Dies ermöglicht es, die Anlagebolzen einfach auf die Kettenlaschen aufzusetzen, ohne sie halten zu müssen.

Eine vorteilhafte Weiterbildung der Erfindung besteht darin, daß eine Kalibrierlehre zum Einstellen der Mittel zum Messen des Abstandes auf einen Referenzwert vorgesehen ist, der dem Abstand zwischen der bestimmten Zahl von Kettengliedern einer neuen Rollenkette entspricht.

Mit dieser Kalibrierlehre kann bei den Mitteln zum Messen des Abstandes der Nullwert der Messung eingestellt werden.

Im Rahmen der Erfindung liegt auch ein Verfahren zum Prüfen des Verschleißes von Rollenketten, das folgende Verfahrensschritte aufweist:
a) Spannen eines Teilabschnitts der Rollenkette mit einer definierten Meßlast durch ein erstes Werkzeug mit Mitteln zum Spannen, die zwei Bolzen aufweisen, welche jeweils in eine Kettenöffnung eingreifen und deren Abstand verändert wird, bis die Rollenkette gespannt ist;
b) Anordnen von zwei Anlagebolzen eines zweiten Werkzeuges mit Mitteln zum Messen des Abstandes zwischen einer bestimmten Anzahl von Kettengliedern jeweils zwischen zwei Nietköpfen auf einer Kettenlasche innerhalb des gespannten Teilabschnitts der Rollenkette wobei ein kreisförmiger Bereich jedes Anlagebolzens zwischen zwei Nietköpfen anliegend plaziert wird;
c) Messen des Abstandes zwischen einer bestimmten Anzahl von Kettengliedern mit dem zweiten Werkzeug mit den Mitteln zum Messen des Abstandes.

Ein alternatives erfindungsgemäßes Verfahren zum Prüfen des Verschleißes von Rollenketten weist folgende Verfahrensschritte auf:
a) Spannen eines Teilabschnitts der Rollenkette mit einer definierten Meßlast durch ein erstes Werkzeug mit Mitteln zum Spannen, die zwei Bolzen aufweisen, welche jeweils in eine Kettenöffnung eingreifen und deren Abstand verändert wird, bis die Rollenkette gespannt ist;
b) Anordnen von zwei Anlagebolzen eines zweiten Werkzeuges mit Mitteln zum Messen des Abstandes zwischen einer bestimmten Anzahl von Kettengliedern jeweils auf einem Nietkopf einer Kettenlasche innerhalb des gespannten Teilabschnitts der Rollenkette wobei ein v-förmiger Einschnitt der Anlagebolzen auf einem der Nietköpfe zentriert wird;
c) Messen des Abstandes zwischen einer bestimmten Anzahl von Kettengliedern mit dem zweiten Werkzeug mit den Mitteln zum Messen des Abstandes.

Eine bevorzugte Weiterbildung der beiden Verfahren besteht darin, daß vor Schritt b.) die Mittel zum Messen des Abstandes zwischen einer bestimmten Anzahl von Kettengliedern mit einer Kalibrierlehre auf einen Referenzwert kalibriert werden.

Das Ergebnis der Messung ist dann die Längung der Kette gegenüber dem Referenzwert, der dem Abstand zwischen der bestimmten Anzahl der Kettenglieder bei einer neuen Rollenkette entspricht.

Schließlich ist es möglich, daß die Mittel zum Messen des Abstandes ein optisches oder akustisches Signal ausgeben, wenn der Abstand zwischen der bestimmten Anzahl von Kettengliedern einen kritischen Wert erreicht.

Nachfolgend wird ein Ausführungsbeispiel der Erfindung anhand von Zeichnungen näher erläutert.

Es zeigen
- Fig. 1: die Mittel zum Spannen eines Teilabschnittes der Kette,
- Fig. 2: eine erste Ausführung der Mittel zum Messen des Abstandes zwischen einer bestimmten Anzahl von Kettengliedern,
- Fig. 3a bis Fig. 3c: Detailansichten, die das Aufbringen der Mittel zum Messen des Abstandes auf die Kettenlaschen der Rollenkette zeigen,
- Fig. 4: eine zweite Ausführung der Mittel zum Messen des Abstandes zwischen einer bestimmten Anzahl von Kettengliedern,
- Fig. 5: eine Kalibrierlehre für die Mittel zum Messen des Abstandes.

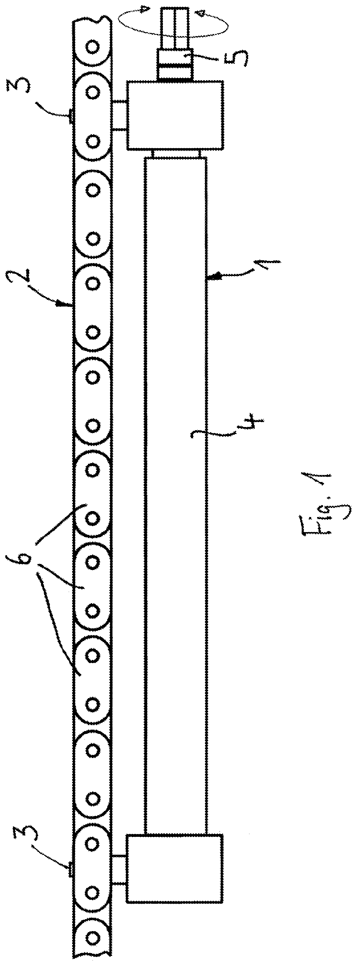

Fig. 1 zeigt die Mittel 1 zum Spannen eines Teilabschnitts der Rollenkette 2 mit einer definierten Meßlast, wobei die Mittel 1 zum Spannen zwei Bolzen 3, welche jeweils in eine Kettenöffnung eingreifen können, und einen die beiden Bolzen 3 verbindenden Grundkörper 4 aufweisen, wobei der Abstand der Bolzen 3 veränderbar ist. Im dargestellten Beispiel kann der Abstand der Bolzen 3 - und somit die auf die Rollenkette 2 aufgebrachte Meßlast - durch Drehen des Verstellgliedes 5 verändert werden. Die Mittel 1 zum Spannen eines Teilabschnitts der Rollenkette 2 können je nach dem maximalen Abstand der Bolzen 3 unterschiedlich große Teilabschnitte der Rollenkette 2 spannen, wobei es sich als vorteilhaft erwiesen hat, daß der Teilabschnitt ca. 20 Kettenglieder 6 umfaßt. Es ist zweckmäßig, daß an einer Markierung die jeweils auf die Rollenkette aufgebrachte Meßlast ablesbar ist.

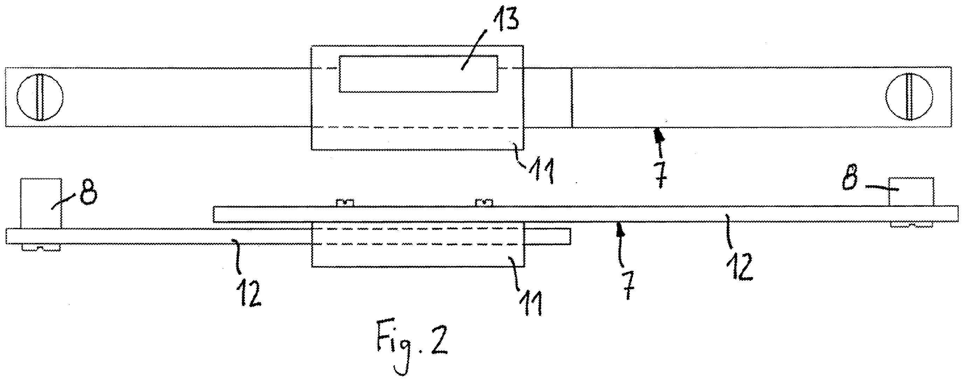

Nachdem ein Teilabschnitt der Rollenkette 2 mit einer definierten Meßlast gespannt ist, wird mit den in Fig. 2 dargestellten Mitteln 7 zum Messen des Abstandes zwischen einer bestimmten Anzahl von Kettengliedern 6, der Abstand zwischen einer bestimmten Anzahl von Kettengliedern 6 innerhalb des gespannten Teilbereiches bestimmt. Die Mittel 7 zum Messen des Abstandes weisen zwei vorzugsweise magnetische Anlagebolzen 8 auf, die zur Anordnung jeweils zwischen zwei Nietköpfen 9 auf einer äußeren Kettenlasche 10 ausgebildet sind. Weiterhin ist eine Vorrichtung 11 zum Messen und Anzeigen des Abstandes zwischen den beiden Anlagebolzen 8 vorgesehen. Im gezeigten Ausführungsbeispiel umfassen die Mittel 7 zum Messen des Abstandes zwischen einer bestimmten Anzahl von Kettengliedern 6 zwei parallel zueinander angeordnete Stangen 12, wobei die an einer der Stangen 12 angeordnete Vorrichtung 11 zum Messen und Anzeigen erfaßt, wie weit die andere Stange 12, welche durch die Meßvorrichtung 11 geschoben ist, ausgezogen bzw. eingeschoben wird. Der jeweilige Meßwert wird auf einer Anzeigevorrichtung 13 digital angezeigt.

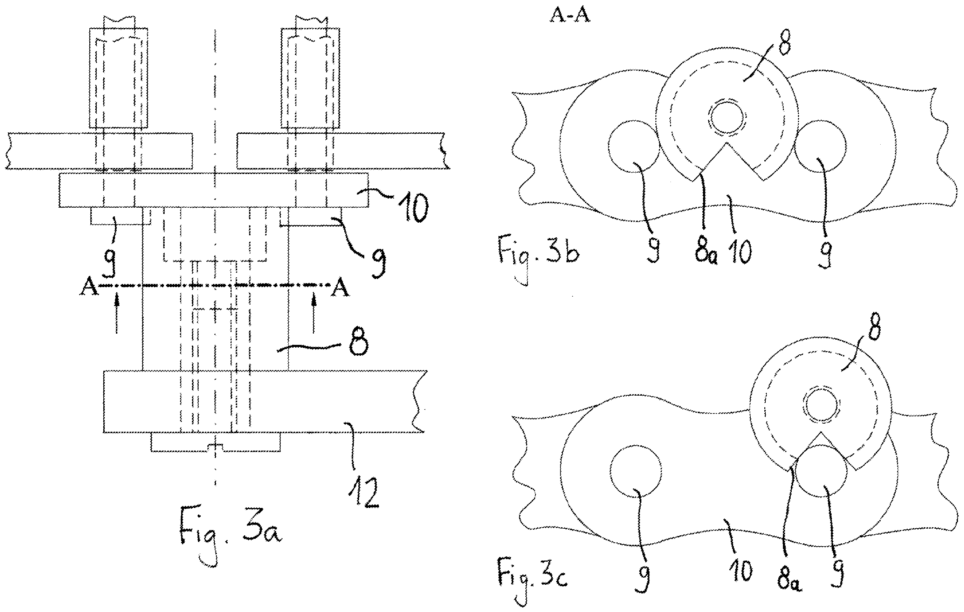

Fig. 3a zeigt in Detailansicht, wie die Mittel 7 zum Messen des Abstandes zwischen einer bestimmten Anzahl von Kettengliedern 6 auf einer Kettenlasche 10 in dem gespannten Teilabschnitt der Rollenkette 2 angeordnet werden. Die beiden Anlagebolzen 8 werden jeweils zwischen zwei Nietköpfen 9 auf einer Kettenlasche 10 angeordnet und aufgrund der magnetischen Ausbildung der Anlagebolzen 8 werden die Mittel 7 zum Messen des Abstandes zwischen den beiden Anlagebolzen 8 in dieser Position gehalten. Nun kann der Abstand zwischen den beiden Anlagebolzen 8 (und somit zwischen den beiden Kettengliedern 6, an denen die Messung erfolgt) von der Anzeigevorrichtung 13 abgelesen werden. Vorzugsweise erfolgt die Messung über eine größere Anzahl von Kettengliedern, beispielsweise über 20 Kettenglieder. Fig. 3b und 3c zeigen als Schnitt A-A zu Fig. 3a eine bevorzugte Ausführung der Anlagebolzen 8. Dieser Anlagebolzen 8 ist als Kreis ausgebildet, der einen v-förmigen Einschnitt 8a aufweist. Es ist bei dieser Ausgestaltung sowohl möglich, den kreisförmigen Bereich des Anlagebolzens 8 zwischen zwei Nietköpfen 9 anliegend zu platzieren, um die Messung des Abstandes zwischen zwei Kettenglieder 6 vorzunehmen (Fig. 3b) als auch den Anlagebolzen 8 mit seinem v-förmigen Einschnitt 8a auf einem der Nietköpfe 9 zu zentrieren, um diese Messung vorzunehmen (Fig. 3c). In diesem letzteren Fall ist es wichtig, den v-förmigen Einschnitt 8a jeweils auf dem gleichen Nietkopf 9 der vorderen und der hinteren Kettenlasche 10 zu platzieren (hier: Jeweils auf dem rechten Nietkopf 9).

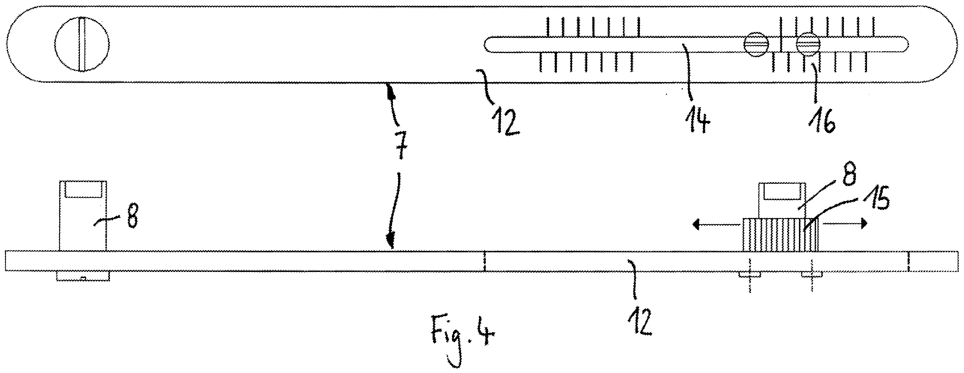

Fig. 4 zeigt eine andere Ausgestaltung der Mittel 7 zum Messen des Abstandes zwischen einer bestimmten Anzahl von Kettengliedern 6, bei der eine Stange 12 mit einem fest montierten und einem innerhalb eines Schlitzes 14 verschiebbaren Anlagebolzen 8 vorgesehen ist, wobei der verschiebbare Anlagebolzen 8 durch eine Klemmvorrichtung 15 festgelegt werden kann. Wenn beide Anlagebolzen 8 in der gewünschten Position angeordnet sind, kann der Abstand zwischen den Anlagebolzen 8 an einer Skala 16 abgelesen werden.

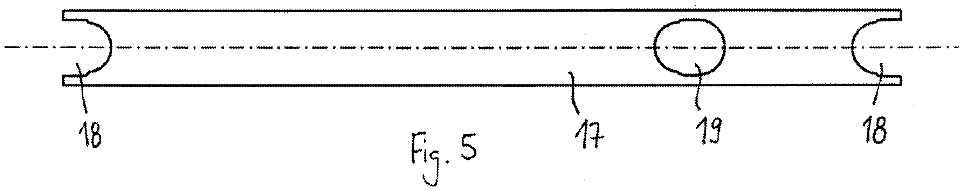

In Fig. 5 ist schließlich eine Kalibrierlehre 17 für die Mittel 7 zum Messen des Abstandes zwischen einer bestimmten Anzahl von Kettengliedern 6 dargestellt. Je nach zu prüfender Rollenkette 2 wird einer der Anlagebolzen 8 in die halbkreisförmige Öffnung 18 an dem einen freien Ende der Kalibrierlehre 17 eingeführt, der andere Anlagebolzen 8 in die halbkreisförmige Öffnung 18 am anderen freien Ende der Kalibrierlehre 17 oder in eine Öffnung 19 in der Kalibrierlehre 17. Der Abstand zwischen den in die Kalibrierlehre 17 eingelegten Anlagebolzen 8 entspricht dann dem Referenzwert, der dem Abstand zwischen der bestimmten Anzahl der Kettenglieder bei einer neuen Rollenkette 2 entspricht.

Es ist dann möglich, vor dem Prüfen einer Rollenkette 2 die Mittel 7 zum Messen des Abstandes zwischen einer bestimmten Anzahl von Kettengliedern 6 auf den jeweiligen Referenzwert zu kalibrieren, z.B. durch Drücken einer Nullwerttaste der Anzeigevorrichtung 13. Die Anzeigevorrichtung 13 zeigt dann die Längung der Rollenkette 2 gegenüber dem Referenzwert an, was es ermöglicht, festzustellen, ob diese noch im zulässigen Bereich liegt. Ist dies nicht der Fall, kann eine optische oder akustische Anzeige erfolgen.

Selbstverständlich ist es auch möglich, im Bereich der Anzeigevorrichtung einen Anschluß vorzusehen, der es ermöglicht, die Anzeigevorrichtung 13 mit einem Computer zu verbinden, um beispielsweise die Meßergebnisse zu speichern.

Die Vorrichtung eignet sich insbesondere zum Prüfen des Verschleißes von im Motorradbereich und in der Industrie eingesetzten Rollenketten mit Dichtringen. Da bei Rollenketten die verbrauchte Schmierung hinter defekten Dichtringen nachträglich von außen nicht mehr erneuerbar ist, unterliegen die Kettenbolzen mit defekten Dichtringen gegenüber den Kettenbolzen mit noch funktionsfähigen Dichtringen einem sehr hohen Verschleiß. Die Längenzunahme der Rollenkette mit Dichtringen verteilt sich daher nicht linear auf alle Kettenbolzen wie bei einer Kette ohne Dichtringe, sondern auf wenige stark verschlissene Kettenbolzen. Das Verschleißmaß einer Kette mit Dichtringen ist somit sehr viel geringer und bedarf daher eines genauen Vermessungssystems. Die erfindungsgemäße Vorrichtung wurde unter Berücksichtigung dieser Gegebenheit entwickelt und ermöglicht die Prüfung von Motorradketten ohne Entfernen der Kette vom Motorrad und ohne Abbauen von Kettenverkleidungen. Sie ist jedoch auch für andere Rollenketten, beispielsweise in Maschinen, geeignet.

## Patentansprüche

1. Vorrichtung zum Prüfen des Verschleißes von Rollenketten, wobei Mittel (1) zum Spannen eines Teilabschnitts der Rollenkette (2) mit einer definierten Meßlast vorgesehen sind und Mittel (7) zum Messen des Abstandes zwischen einer bestimmten Anzahl von Kettengliedern (6) vorgesehen sind, **dadurch gekennzeichnet, daß** die Vorrichtung aus zwei unterschiedlichen Werkzeugen besteht, wobei das eine Werkzeug Mittel (1) zum Spannen eines Teilabschnitts der Rollenkette (2) mit einer definierten Meßlast umfasst und das andere Werkzeug Mittel (7) zum Messen des Abstandes zwischen einer bestimmten Anzahl von Kettengliedern (6) umfasst, wobei die Mittel (1) zum Spannen eines Teilabschnittes der Rollenkette (2) zwei Bolzen (3), die jeweils in eine Kettenöffnung eingreifen können, und einen die beiden Bolzen (3) verbindenden Grundkörper (4) aufweisen, wobei der Abstand der Bolzen (3) veränderbar ist und die Mittel (7) zum Messen des Abstandes zwei Anlagebolzen (8) aufweisen, die zur seitlichen Anordnung an den Kettenlaschen jeweils zwischen zwei Nietköpfen (9) ausgebildet sind, wobei ein kreisförmiger Bereich jedes Anlagebolzens (8) zwischen zwei Nietköpfen (9) anliegend plazierbar ist und eine Vorrichtung (11) zum Messen und Anzeigen des Abstandes zwischen den beiden Anlagebolzen (8) umfassen.

2. Vorrichtung zum Prüfen des Verschleißes von Rollenketten, wobei Mittel (1) zum Spannen eines Teilabschnitts der Rollenkette (2) mit einer definierten Meßlast vorgesehen sind und Mittel (7) zum Messen des Abstandes zwischen einer bestimmten Anzahl von Kettengliedern (6) vorgesehen sind, **dadurch gekennzeichnet, daß** die Vorrichtung aus zwei unterschiedlichen Werkzeugen besteht, wobei das eine Werkzeug Mittel (1) zum Spannen eines Teilabschnitts der Rollenkette (2) mit einer definierten Meßlast umfasst und das andere Werkzeug Mittel (7) zum Messen des Abstandes zwischen einer bestimmten Anzahl von Kettengliedern (6) umfasst, wobei die Mittel (1) zum Spannen eines Teilabschnittes der Rollenkette (2) zwei Bolzen (3), die jeweils in eine Kettenöffnung eingreifen können, und einen die beiden Bolzen (3) verbindenden Grundkörper (4) aufweisen, wobei der Abstand der Bolzen (3) veränderbar ist und die Mittel (7) zum Messen des Abstandes zwei Anlagebolzen (8) aufweisen, die zur seitlichen Anordnung an den Kettenlaschen jeweils zwischen zwei Nietköpfen (9) ausgebildet sind, wobei die Anlagebolzen (8) einen v-förmigen Einschnitt (8a) aufweisen, der auf einem der Nietköpfe (9) zentrierbar ist und eine Vorrichtung (11) zum Messen und Anzeigen des Abstandes zwischen den beiden Anlagebolzen (8) umfassen.

3. Vorrichtung gemäß Anspruch 1 oder Anspruch 2, **dadurch gekennzeichnet, daß** die Mittel (7) zum Messen des Abstandes zwischen einer bestimmten Anzahl von Kettengliedern (6) als Abstandslehre mit einem veränderbaren Abstand zwischen den beiden Anlagebolzen (8) ausgebildet sind.

4. Vorrichtung gemäß Anspruch 3, **dadurch gekennzeichnet, daß** die Abstandslehre eine digitale Abstandslehre ist.

5. Vorrichtung gemäß Anspruch 4, **dadurch gekennzeichnet, daß** die Vorrichtung Speichermittel zum Speichern der Meßwerte umfaßt.

6. Vorrichtung gemäß Anspruch 1 oder Anspruch 2, **dadurch gekennzeichnet, daß** die freien Enden der Anlagebolzen (8) magnetisch sind.

7. Vorrichtung gemäß einem der Ansprüche 1 bis 6, **dadurch gekennzeichnet, daß** eine Kalibrierlehre (17) zum Einstellen der Mittel zum Messen des Abstandes auf einen Referenzwert vorgesehen ist, der dem Abstand zwischen der bestimmten Zahl von Kettengliedern (6) einer neuen Rollenkette (2) entspricht.

8. Verfahren zum Prüfen des Verschleißes von Rollenketten unter Verwendung einer Vorrichtung gemäß Anspruch 1, **gekennzeichnet durch** folgende Verfahrensschritte:
a) Spannen eines Teilabschnitts der Rollenkette (2) mit einer definierten Meßlast durch ein erstes Werkzeug mit Mitteln (1) zum Spannen, die zwei Bolzen (3) aufweisen, welche jeweils in eine Kettenöffnung eingreifen und deren Abstand verändert wird, bis die Rollenkette (2) gespannt ist;
b) Anordnen von zwei Anlagebolzen (8) eines zweiten Werkzeuges mit Mitteln (7) zum Messen des Abstandes zwischen einer bestimmten Anzahl von Kettengliedern (6) jeweils zwischen zwei Nietköpfen (9) auf einer Kettenlasche (10) innerhalb des gespannten Teilabschnitts der Rollenkette (2), wobei ein kreisförmiger Bereich jedes Anlagebolzens (8) zwischen zwei Nietköpfen (9) anliegend plaziert wird;
c) Messen des Abstandes zwischen einer bestimmten Anzahl von Kettengliedern (6) mit dem zweiten Werkzeug mit den Mitteln (7) zum Messen des Abstandes.

9. Verfahren zum Prüfen des Verschleißes von Rollenketten unter Verwendung einer Vorrichtung gemäß Anspruch 2, **gekennzeichnet durch** folgende Verfahrensschritte:
a) Spannen eines Teilabschnitts der Rollenkette (2) mit einer definierten Meßlast durch ein erstes Werkzeug mit Mitteln (1) zum Spannen, die zwei Bolzen (3) aufweisen, welche jeweils in eine Kettenöffnung eingreifen und deren Abstand verändert wird, bis die Rollenkette (2) gespannt ist;
b) Anordnen von zwei Anlagebolzen (8) eines zweiten Werkzeuges mit Mitteln (7) zum Messen des Abstandes zwischen einer bestimmten Anzahl von Kettengliedern (6) jeweils auf einem Nietkopf (9) einer Kettenlasche (10) innerhalb des gespannten Teilabschnitts der Rollenkette (2), wobei ein v-förmiger Einschnitt (8a) der Anlagebolzen (8) auf einem der Nietköpfe (9) zentriert wird;
c) Messen des Abstandes zwischen einer bestimmten Anzahl von Kettengliedern (6) mit dem zweiten Werkzeug mit den Mitteln (7) zum Messen des Abstandes.

10. Verfahren gemäß einem der Ansprüche 8 und 9, **dadurch gekennzeichnet, daß** vor Schritt b.) die Mittel (7) zum Messen des Abstandes zwischen einer bestimmten Anzahl von Kettengliedern (6) mit einer Kalibrierlehre (17) auf einen Referenzwert kalibriert werden.

11. Verfahren gemäß einem der Ansprüche 8 bis 10, **dadurch gekennzeichnet, daß** die Mittel (7) zum Messen des Abstandes ein optisches oder akustisches Signal ausgeben, wenn der Abstand zwischen der bestimmten Anzahl von Kettengliedern (6) einen kritischen Wert erreicht.

## Claims

1. Device for checking the wear of roller chains, wherein means (1) are provided for tensioning a portion of the roller chain (2) with a defined measuring load and means (7) are provided for measuring the spacing between a given number of chain links (6), **characterised in that** the device consists of two different tools, one tool comprising means (1) for tensioning a portion of the roller chain (2) with a defined measuring load and the other tool comprising means (7) for measuring the spacing between a given number of chain links (6), the means (1) for tensioning a portion of the roller chain (2) comprising two pins (3), each of which can engage in a chain opening, and a frame (4) connecting the two pins (3), the distance between the pins (3) being variable, and the means (7) for measuring the spacing having two contact pins (8), each of which is configured for lateral arrangement on the chain links between two rivet heads (9), wherein a circular region of each contact pin (8) can be placed in abutting relationship between two rivet heads (9) and comprises a device (11) for measuring and indicating the spacing between the two contact pins (8).

2. Device for checking the wear of roller chains, wherein means (1) are provided for tensioning a portion of the roller chain (2) with a defined measuring load and means (7) are provided for measuring the spacing between a given number of chain links (6), **characterised in that** the device consists of two different tools, one tool comprising means (1) for tensioning a portion of the roller chain (2) with a defined measuring load and the other tool comprising means (7) for measuring the spacing between a given number of chain links (6), the means (1) for tensioning a portion of the roller chain (2) having two pins (3), each of which can each engage in a chain opening, and a frame (4) connecting the two pins (3), the distance between the pins (3) being variable and the means (7) for measuring the spacing having two contact pins (8), each of which is configured for lateral arrangement on the chain links between two rivet heads (9), wherein the contact pins (8) have a v-shaped incision (8a) which can be centred on one of the rivet heads (9) and comprise a device (11) for measuring and indicating the spacing between the two contact pins (8).

3. Device according to claim 1 or claim 2, **characterized in that** the means (7) for measuring the spacing between a given number of chain links (6) are designed as a distance gauge with a variable distance between the two contact pins (8).

4. Device according to claim 3, **characterized in that** the distance gauge is a digital distance gauge.

5. Device according to claim 4, **characterized in that** the device comprises storage means for storing the measured values.

6. Device according to claim 1 or claim 2, **characterized in that** the free ends of the contact pins (8) are magnetic.

7. Device according to one of claims 1 to 6, **characterized in that** a calibration gauge (17) is provided for adjusting the means for measuring the distance to a reference value corresponding to the distance between the determined number of chain links (6) of a new roller chain (2).

8. Method for checking the wear of roller chains using a device according to claim 1, **characterized by** the following method steps:
a) tensioning a portion of the roller chain (2) with a defined measured load by a first tool having tensioning means (1) which have two pins (3) which each engage in a chain opening and the spacing of which is varied until the roller chain (2) is tensioned;
b) arrangement of two contact pins (8) of a second tool with means (7) for measuring the spacing between a given number of chain links (6), the contact pins (8) being arranged between two rivet heads (9) on a chain link (10) within the tensioned portion of the roller chain (2), wherein a circular region of each contact pin (8) is placed adjacent between two rivet heads (9);
c) measuring the spacing between a given number of chain links (6) with the second tool with the means (7) for measuring the spacing.

9. Method for checking the wear of roller chains using a device according to claim 2, **characterized by** the following method steps:
a) tensioning a portion of the roller chain (2) with a defined measuring load by a first tool having tensioning means (1) which have two pins (3) which each engage in a chain opening and the spacing of which is varied until the roller chain (2) is tensioned;
b) arranging two contact pins (8) of a second tool with means (7) for measuring the spacing between a given number of chain links (6), each contact pin (8) being arranged on a rivet head (9) of a chain link (10) within the tensioned portion of the roller chain (2), wherein a v-shaped incision (8a) of the contact pins (8) is centred on one of the rivet heads (9);
c) measuring the spacing between a given number of chain links (6) with the second tool with the means (7) for measuring the spacing.

10. Method according to one of claims 8 and 9, **characterized in that** before step b.) the means (7) for measuring the spacing between a certain number of chain links (6) are calibrated with a calibration gauge (17) to a reference value.

11. Method according to any one of claims 8 to 10, **characterized in that** the means (7) for measuring the spacing output an optical or acoustic signal when the spacing between the certain number of chain links (6) reaches a critical value.

## Revendications

1. Dispositif pour contrôler l'usure de chaînes à rouleaux, dans lequel des moyens (1) sont prévus pour tendre une section partielle de la chaîne à rouleaux (2) avec une charge de mesure définie, et des moyens (7) sont prévus pour mesurer la distance entre un nombre spécifique de maillons de chaîne (6), **caractérisé en ce que** le dispositif se compose de deux outils différents, l'un des outils étant muni de moyens (1) pour tendre une section partielle de la chaîne à rouleaux (2) avec une charge de mesure définie, et l'autre outil étant muni de moyens (7) pour mesurer la distance entre un nombre spécifique de maillons de chaîne (6), les moyens (1) pour tendre une section partielle de la chaîne à rouleaux (2) comprenant deux chevilles (3) qui peuvent s'engager chacune dans une ouverture de chaîne et un corps de base (4) reliant les deux chevilles (3), la distance entre les chevilles (3) pouvant être modifiée, et les moyens (7) pour mesure la distance comprenant deux boulons de butée (8) adaptés pour être disposés latéralement entre deux têtes de rivet (9) sur une éclisse de chaîne (10) et une section en arc de cercle de chaque boulon de butée (8) pouvant être placé en contact entre deux têtes de rivet (9), ainsi qu'un dispositif (11) pour mesurer et indiquer la distance entre les deux boulons de butée (8).

2. Dispositif pour contrôler l'usure de chaînes à rouleaux, dans lequel des moyens (1) sont prévus pour tendre une section partielle de la chaîne à rouleaux (2) avec une charge de mesure définie, et des moyens (7) sont prévus pour mesurer la distance entre un nombre spécifique de maillons de chaîne (6), **caractérisé en ce que** le dispositif se compose de deux outils différents, l'un des outils étant muni de moyens (1) pour tendre une section partielle de la chaîne à rouleaux (2) avec une charge de mesure définie, et l'autre outil étant muni de moyens (7) pour mesurer la distance entre un nombre spécifique de maillons de chaîne (6), les moyens (1) pour tendre une section partielle de la chaîne à rouleaux (2) comprenant deux chevilles (3) qui peuvent s'engager chacune dans une ouverture de chaîne et un corps de base (4) reliant les deux chevilles (3), la distance entre les chevilles (3) pouvant être modifiée, et les moyens (7) pour mesurer la distance comprenant deux boulons de butée (8) adaptés pour être disposés latéralement entre deux têtes de rivet (9) sur une éclisse de chaîne (10), et les boulons de butée (8) présentant une encoche (8a) en forme de V qui peut être centrée sur une tête de rivet (9), ainsi qu'un dispositif (11) pour mesurer et indiquer la distance entre les deux boulons de butée (8).

3. Dispositif selon la revendication 1 ou la revendication 2, **caractérisé en ce que** les moyens (7) pour mesurer la distance entre un nombre spécifique de maillons de chaîne (6) sont conçus comme une jauge de distance avec une distance entre les deux boulons de butée (8) modifiable.

4. Dispositif selon la revendication 3, **caractérisé en ce que** la jauge de distance est une jauge de distance numérique.

5. Dispositif selon la revendication 4, **caractérisé en ce que** le dispositif comprend des moyens de stockage pour stocker les valeurs mesurées.

6. Dispositif selon la revendication 1 ou 2, **caractérisé en ce que** les extrémités libres des boulons de butée (8) sont magnétiques.

7. Dispositif selon l'une des revendications 1 à 6, **caractérisé en ce qu'il** est prévu une jauge de calibrage (17) pour ajuster les moyens pour mesurer la distance à une valeur de référence qui correspond à la distance entre le nombre spécifique de maillons (6) d'une chaîne à rouleaux (2) neuve.

8. Procédé pour contrôler l'usure de chaînes à rouleaux en utilisant un dispositif selon la revendication 1, **caractérisé par** les étapes de procédé suivantes consistant à :
a) tendre une section partielle de la chaîne à rouleaux (2) avec une charge de mesure définie par le biais d'un premier outil ayant des moyens (1) de tension munis de deux chevilles (3) qui s'engagent chacun dans une ouverture de chaîne et dont la distance est modifiée jusqu'à ce que la chaîne à rouleaux (2) soit tendue ;
b) disposer deux boulons de butée (8) d'un deuxième outil muni de moyens (7) pour mesurer la distance entre un nombre spécifique de maillons de chaîne (6), chacun entre deux têtes de rivet (9) sur une éclisse de chaîne (10) à l'intérieur de la section partielle tendue de la chaîne à rouleaux (2), une section en arc de cercle de chaque boulon de butée (8) étant placé en contact entre deux têtes de rivet (9) ;
c) mesurer la distance entre un nombre spécifique de maillons de chaîne (6) avec le deuxième outil muni des moyens (7) pour mesurer la distance.

9. Procédé pour contrôler l'usure de chaînes à rouleaux en utilisant un dispositif selon la revendication 2, **caractérisé par** les étapes de procédé suivantes consistant à :
a) tendre une section partielle de la chaîne à rouleaux (2) avec une charge de mesure définie par le biais d'un premier outil ayant des moyens (1) de tension munis de deux chevilles (3) qui s'engagent chacun dans une ouverture de chaîne et dont la distance est modifiée jusqu'à ce que la chaîne à rouleaux (2) soit tendue ;
b) disposer deux boulons de butée (8) d'un deuxième outil muni de moyens (7) pour mesurer la distance entre un nombre spécifique de maillons de chaîne (6), chacun sur une tête de rivet (9) d'une éclisse de chaîne (10) à l'intérieur de la section partielle tendue de la chaîne à rouleaux (2), une entaille en forme de V des boulons de butée (8) étant centrée sur une tête de rivet (9) ;
c) mesurer la distance entre un nombre spécifique de maillons de chaîne (6) avec le deuxième outil muni des moyens (7) pour mesurer la distance.

10. Procédé selon l'une des revendications 8 et 9, **caractérisé en ce qu'**avant l'étape b), les moyens (7) pour mesurer la distance entre un nombre spécifique de maillons de chaîne (6) sont calibrés à une valeur de référence au moyen d'une jauge de calibrage (17).

11. Procédé selon l'une des revendications 8 à 10, **caractérisé en ce que** les moyens (7) pour mesurer la distance délivrent un signal optique ou acoustique lorsque la distance entre le nombre spécifique de maillons de chaîne (6) atteint une valeur critique.
